# EUROPÄISCHE PATENTSCHRIFT

(11) **EP 0 795 829 B1**
(45) Veröffentlichungstag und Bekanntmachung des Hinweises auf die Patenterteilung: **17.12.2008**
(21) Anmeldenummer: 97103417.8
(22) Anmeldetag: 01.03.1997
(51) Int. Cl.: G06F 13/38, G06F 13/40, H03K 19/00, G06F 1/32

(54) **Integrierte Schaltungsanordnung mit einer mit einem Datenbus verbundenen Buslogikeinheit**
Integrated circuit with a bus logic unit connected to a data bus
Circuit intégré comportant une unité logique de bus connectée à un bus de données

(30) Priorität: 07.03.1996 DE 19608776
(43) Veröffentlichungstag der Anmeldung: 17.09.1997
(73) Patentinhaber: ATMEL Germany GmbH, 74072 Heilbronn (DE)
(72) Erfinder: Kocks, Michael, 74074 Heilbronn (DE); Krimmer, Gerald, 74076 Heilbronn (DE)

(56) Entgegenhaltungen:
- DE-A- 4 401 410
- DE-A- 4 425 485
- US-A- 3 864 578
- "Data sheet: PCA82C252 Fault-tolerant CAN transceiver" [Online] 26. Oktober 1995 (1995-10-26) , PHILIPS SEMICONDUCTORS XP002170252 Gefunden im Internet: <URL: http://ava.univ-savoie.fr/local/LAMII/data sheet/PCA82C252.pdf> [gefunden am 2001-06-21] * Seite 2 - Seite 4 *

## Beschreibung

Die Erfindung betrifft eine integrierte Schaltungsanordnung gemäß dem Oberbegriff des Patentanspruchs 1.

Eine derartige Schaltungsanordnung ist aus der Offen begungsschriff DE 44 01 410 bekannt. Die dort beschriebene integrierte Schaltungsanordnung (IC) weist eine Buslogikeinheit auf, die über ein Aktivierungssignal, das an einer Aktivierungsleitung eines Datenbusses ansteht, zur Datenübertragung aktivierbar ist, d. h. das IC ist durch das Aktivierungssignal als Datenquelle oder Datenziel adressierbar. Mit der Buslogikeinheit werden zum IC übertragene Daten ausgewertet, diese Daten gespeichert und analoge oder digitaler IC-Funktionen nach Maßgabe der gespeicherten Daten gesteuert.

Im Datenblatt der Produktfamilie PCA 82C252 der Firma PHILIPS ist ein Fehler-toleranter CAN-Transceiver beschrieben. Ein solcher CAN-Transceiver bildet die physikalische Schnittstelle zwischen einem physikalischen, so genannten CAN-Bus und einem über einen internen Datenbus mit diesem gekoppelten CAN-Controller. Der CAN-Transceiver weist in seinem Sendepfad eine über den TXD-Eingang mit dem internen Bus gekoppelte Buslogikeinheit auf, der eine Treiberschaltung ("Driver') nach geschaltet ist. Die Buslogikeinheit weist eine stromsparende Funktionalität auf. Zu diesem Zwecke ist die Buslogikeinheit mit einem Stand-by/Wake-up Steuermodul ausgestattet, welches über einen Steuereingang mit dem internen Datenbus gekoppelt ist. Über dieses Steuermodul ist die Buslogikeinheit ein/ausschaltbar. In einem Stand-by Betrieb verbraucht die Buslogikeinheit einen Ruhestrom von etwa 100 µA.

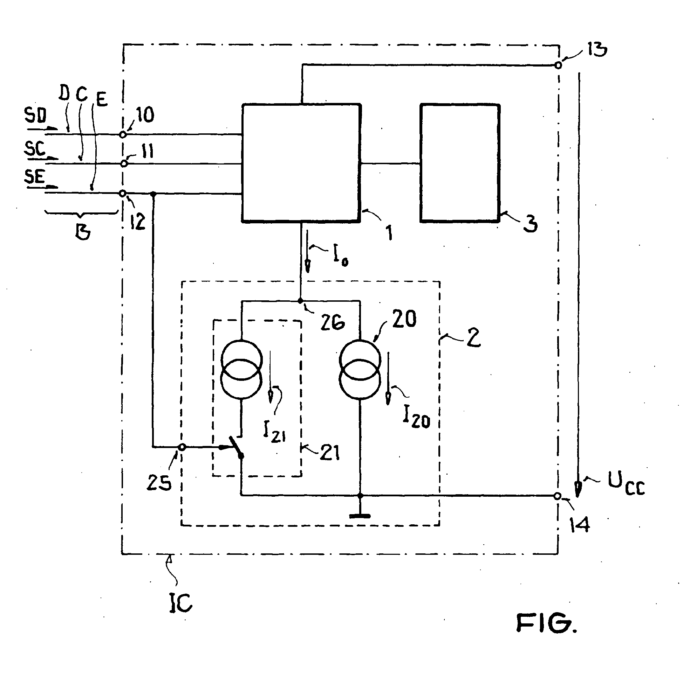

Die Offenlegungsschrift DE 44 25 485 beschreibt ein Multiplexübertragungsgerät mit einer Vielzahl von Kommunikationsknoten, die miteinander über ein Multiplexübertragungspfad verbunden sind. DE 44 25 485 beschreibt insbesondere in Fig. 2 einen als steuerbaren Schalter ausgebildeten Transistor 25. Dieser Transistor 25 fungiert als Stromquelle zur Versorgung des Multiplexmoduls 15 mit einem Betriebsstrom.

Der wesentliche Nachteil dieser Schaltungsanordnung liegt in ihrem hohen Stromverbrauch, der sich insbesondere bei einer aus einer Batterie gespeisten Schaltungsanordnung ungünstig auf die Betriebsbereitschaft der Schaltungsanordnung auswirkt.

Der Erfindung liegt die Aufgabe zugrunde, eine integrierte Schaltungsanordnung gemäß dem Oberbegriff des Patentanspruchs 1 anzugeben, deren mittlerer Stromverbrauch gering ist und die mit geringem Aufwand kostengünstig herstellbar ist.

Die Aufgabe wird durch die kennzeichnenden Merkmale des Patentanspruchs 1 gelöst. vorteilhafte Ausgestaltungen und weiterbildungen ergeben sich aus den Unteransprüchen

Erfindungsgemäß ist zur Einspeisung eines Betriebsstromes in die Buslogikeinheit eine steuerbare Stromversorgungseinheit vorgesehen, die einen Steuereingang aufweist, der mit der Aktivierungsleitung eines vorzugsweise als Drei-Draht-Bus ausgeführten Datenbusses verbunden ist. Der durch die Buslogikeinheit fließende Betriebsstrom wird bei deaktivierter Buslogikeinheit durch das an der Aktivierungsleitung anstehende Aktivierungssignal reduziert. Er wird demnach in Übertragungspausen, d. h. in Zeitintervallen, in denen keine Daten übertragen werden, reduziert und ist somit nur während der Datenübertragung, d. h. dann, wenn die Buslogikeinheit zur Datenübertragung aktiviert ist, hoch. Durch die Reduzierung des Betriebsstromes wird auch der mittlere Stromverbrauch der Schaltungsanordnung reduziert. Man erhält dann, insbesondere bei einem geringem Datendurchsatz, eine erhebliche Reduzierung des mittleren Stromverbrauchs. Da der Betriebsstrom über die Aktivierungsleitung variierbar ist, werden zur Steuerung des Betriebsstromes keine zusätzlichen Leitungen und demnach auch keine zusätzlichen Anschlüsse am Gehäuse der Schaltungsanordnung benötigt, so daß diese kostengünstig herstellbar ist.

Die steuerbare Stromversorgungseinheit weist vorzugsweise eine Ruhestromquelle und eine über den Steuereingang schaltbare Stromquelle auf. Die beiden Stromquellen sind zueinander parallel geschaltet und liefern jeweils einen ersten bzw. zweiten Teilstrom. Der Betriebsstrom setzt sich aus den beiden Teilströmen zusammen und wird demnach durch das Einschalten bzw. Ausschalten der schaltbaren Stromquelle um den wert des zweiten Teilstromes erhöht bzw. reduziert.

Die erfindungsgemäße Schaltungsanordnung ist in einer Vielzahl von elektronischen Geräten, beispielsweise in Telekommunikationsgeräten oder in Geräten der Unterhaltungselektronik, einsetzbar. Aufgrund des geringen Stromverbrauchs eignet sie sich besonders gut für den Einsatz in batterie- oder akkubetriebenen Geräten.

Die Erfindung wird im folgenden anhand eines als Ausführungsbeispiel in der Figur gezeigten Blockschaltbilds näher beschrieben. Gemäß der Figur weist die integrierte Schaltungsanordnung IC einen Datenanschluß 10, einen Taktanschluß 11, einen Aktivierungsanschluß 12 und zwei versorgungsanschlüsse 13 und 14, denen die Versorgungsspannung U_{CC} zugeführt wird, auf. Die Datenleitung D, die Taktleitung C und die Aktivierungsleitung E, des als Drei-Draht-Bus ausgeführten Datenbusses B sind über den Datenanschluß 10 bzw. über den Taktanschluß 11 bzw. über den Aktivierungsanschluß 12 mit der - beispielsweise als I²L-Logikschaltung ausgeführten - Buslogikeinheit 1 verbunden und der eine Versorgungsanschluß 13 ist über die Buslogikeinheit 1 mit der steuerbaren Stromversorgungseinheit 2 und über diese mit dem anderen Versorgungsanschluß 14 verbunden. Mit der Buslogikeinheit 1 wird die Datenübertragung, d. h. die Übernahme von Daten vom Datenbus B oder die Übergabe von Daten auf den Datenbus B und die Speicherung der Daten in selektierbaren Speicherzellen der Buslogikeinheit 1, gesteuert. Die steuerbare Stromversorgungseinheit 2 ist zur Steuerung des der Buslogikeinheit 1 zur Energieversorgung zugeführten Betriebsstromes I₀ vorgesehen. Sie weist eine Ruhestromquelle 20 und eine dazu parallel geschaltete schaltbare Stromquelle 21 auf, welche über den Steuereingang 25 der steuerbaren Stromversorgungseinheit 2, der über den Aktivierungsanschluß 12 mit der Aktivierungsleitung E verbunden ist, ein- und ausschaltbar ist. Die beiden Stromquellen 20 und 21 liefern jeweils einen ersten Teilstrom I₂₀ bzw. einen zweiten Teilstrom I₂₁, die an einem mit der Buslogikeinheit 1 verbundenen Summationsknoten 26 zusammengeführt und zum Betriebsstrom I₀ summiert werden.

Bei der Datenübertragung werden die Daten der Datenleitung D als serielle Folge von Datenbits SD zugeführt. Der Taktleitung C wird zur Synchronisation der Datenbits SD das periodische Taktsignals SC zugeführt und der Aktivierungsleitung E wird das Aktivierungssignal SE zugeführt, durch das die Buslogikeinheit 1 zur Datenübertragung, aktiviert wird. Gleichzeitig mit der Aktivierung der Buslogikeinheit 1 wird auch die schaltbare Stromquelle 21 durch das Aktivierungssignal SE, welches während der Datenübertragung nicht verändert wird, eingeschaltet und hierdurch der Betriebsstrom I₀ um den wert des zweiten Teilstromes I₂₁ erhöht. Die Buslogikeinheit 1 ist bei diesem Betriebsstrom I₀ voll funktionsfähig und kann somit ein Busprotokoll, gemäß dem die Daten über den Datenbus übertragen werden, überwachen und die Daten verarbeiten und in Speicherzellen der Buslogikeinheit 1 speichern.

Nach der Datenübertragung wird die Buslogikeinheit 1 durch das Aktivierungssignals SE deaktiviert und der Datenbus B für weitere in der Figur nicht gezeigte Schaltungsanordnungen freigegeben. Durch das Aktivierungssignal SE wird gleichzeitig auch die schaltbare Stromquelle 21 ausgeschaltet und der Betriebsstrom I₀ hierdurch auf den wert des von der Ruhestromquelle 20 gelieferten ersten Teilstromes I₂₀ reduziert. Die Buslogikeinheit 1 ist bei diesem Betriebsstrom I₀ nicht mehr voll funktionsfähig; der Betriebsstrom I₀ reicht jedoch aus, um die in den Speicherzellen der Buslogikeinheit 1 gespeicherten Daten zu erhalten. Verschiedene, durch die gespeicherten Daten gesteuerte Funktionen der Funktionseinheit 3 sind somit auch nach der Datenübertragung, d. h. auch bei deaktivierter Buslogikeinheit 1, steuerbar.

Durch die Reduzierung des Betriebsstromes I₀ wird der mittlere Stromverbrauch der Schaltungsanordnung IC reduziert, wobei die Reduzierung um so größer ist, je kürzer die Übertragungszeiten sind und je größer die Übertragungspausen sind.

Im vorliegenden Ausführungsbeispiel ist die Buslogikeinheit 1 der Schaltungsanordnung IC mit einem als Drei-Draht-Bus ausgeführten seriellen Datenbus B verbunden. Denkbar ist jedoch auch eine Schaltungsanordnung IC, deren Buslogikeinheit 1 mit einem, eine Aktivierungsleitung E und mehrere Datenleitungen aufweisenden, parallelen Datenbus B verbunden ist.

## Patentansprüche

1. Integrierte Schaltungsanordnung (IC)
(a) mit einer Buslogikeinheit (1),
(b) mit einem mit der Buslogikeinheit verbundenen Datenbus (B),
(b1) der eine Aktivierungsleitung (E) für ein Aktivierungssignal (SE) aufweist,
(b2) über welches die Buslogikeinheit (B) für eine Datenübertragung über den Datenbus (B) aktivierbar ist, **gekennzeichnet**
(c) mit einer steuerbaren Stromversorgungseinheit (2),
(c1) die mit ihrem Steuereingang (25) mit der Aktivierungsleitung (E) verbunden ist,
(c2) die zur Einspeisung eines Betriebsstromes (I₀) in die Buslogikeinheit (1) mit dieser verbunden ist,
(c3) wobei der von der Stromversorgungseinheit (25) bereitgestellte Betriebsstrom (I₀) bei deaktivierter Buslogikeinheit (1) durch das Aktivierungssignal (SE) reduzierbar ist,
(c4) die zur Erzeugung des reduzierten Betriebsstromes (I₀) eine Ruhestromquelle (20), die einen Ruhestrom (I₂₀) erzeugt, und eine über einen steuerbaren Schalter steuerbare Stromquelle (21), die über das Aktivierungssignal (SE) ein- und ausschaltbar ist und die einen steuerbaren Teilstrom (I₂₁) erzeugt, aufweist,
(c5) wobei die Ruhestromquelle (20) und die steuerbare Stromquelle (21) in Parallelschaltung zueinander angeordnet sind, und
(c6) wobei der Ruhestram (I₂₀) ausreicht, verschiedene Funktionen einer Funktionseinheit (3) auch bei deaktivierter Buslogik ein heit (1) zn Stenern.

2. Schaltungsanordnung nach Anspruch 1,
**dadurch gekennzeichnet,**
**dass** der Datenbus (B) als Drei-Draht-Bus (B) ausgebildet ist, der neben der Aktivierungsleitung (SE) eine Datenleitung (D) für die Daten und eine Taktleitung (C) für ein periodisches Taktsignal (SC) aufweist.

3. Schaltungsanordnung nach einem der vorstehenden Ansprüche,
**dadurch gekennzeichnet,**
**dass** die Buslogikeinheit (1) mit allen Leitungen (D, C, E) des Datenbusses (B) verbunden ist.

## Claims

1. Integrated circuit arrangement (IC) comprising
a) a bus logic unit (1),
b) a data bus (B) connected with the bus logic unit,
b1) which comprises an activation line (E) for an activation signal (SE),
b2) by way of which the bus logic unit (B) is activatable for a data transmission via the data bus (B),
**characterised by**
c) a controllable current supply unit (2),
c1) which is connected by its control input (25) with the activation line (E),
c2) which for supply of an operating current (I₀) to the bus logic unit (1) is connected therewith,
c3) wherein the operating current (I₀) provided by the current supply unit (25) can be reduced by the activation signal (SE) when the bus logic unit (1) is deactivated,
c4) which, for producing the reduced operating current (I₀), comprises a quiescent current source (20), which produces a quiescent current (I₂₀), and a current source (21), which is controllable by way of a controllable switch and which can be switched on and off by way of the activation signal (SE) and generates a controllable part current (I₂₁),
c5) wherein the quiescent current source (20) and the controllable current source (21) are arranged in parallel connection with one another, and
c6) wherein the quiescent current (I₂₀) is sufficient to control different functions of a functional unit (3) even when the bus logic unit (1) is deactivated.

2. Circuit arrangement according to claim 1, **characterised in that** the data bus (B) is constructed as a triple wire bus (B) which apart from the activation line (SE) comprises a data line (D) for the data and a clock line (C) for a periodic clock signal (SC).

3. Circuit arrangement according to one of the preceding claims, **characterised in that** the bus logic unit (1) is connected with all lines (D, C, E) of the data bus (B).

## Revendications

1. Circuit intégré (IC) comprenant :
(a) une unité logique de bus (1),
(b) un bus de données (B) relié à l'unité logique de bus,
(b1) qui présente une ligne d'activation (E) pour un signal d'activation (SE)
(b2) par l'intermédiaire de laquelle l'unité logique de bus (1) peut être activée pour une transmission de données par le bus de données (B), **caractérisé par**
(c) une unité d'alimentation en courant (2),
(c1) qui est reliée par son entrée de commande (25) à la ligne d'activation (E),
(c2) qui est reliée à l'unité logique de bus (1) pour alimenter celle-ci par un courant de fonctionnement (I₀),
(c3) dont le courant de fonctionnement (I₀) qu'elle (2) met à disposition peut être réduit par le signal d'activation (SE)lorsque l'unité logique de bus (1) est désactivée,
(c4) qui présente une source de courant de repos (20) produisant un courant de repos (I₂₀) pour produire le courant de fonctionnement réduit (I₀), et une source de courant (21) pouvant être commandée par un interrupteur commandable, qui peut être ouvert ou fermé par l'intermédiaire du signal d'activation (SE) et qui produit un courant partiel (I₂₁) commandable,
(c5) dont la source de courant de repos (20) et la source de courant (21) commandable sont montées en parallèle, et
(c6) dont le courant de repos (I₂₀) est suffisant pour commander différentes fonctions d'une unité fonctionnelle (3), même lorsque l'unité logique de bus (1) est désactivée.

2. Circuit selon la revendication 1, **caractérisé en ce que** le bus de données (B) est conformé en bus trois fils (B) qui, en plus de la ligne d'activation (SE) présente une ligne de données (D) pour les données et une ligne d'horloge (C) pour un signal d'horloge périodique (SC).

3. Circuit selon l'une quelconque des revendications précédentes, **caractérisé en ce que** l'unité logique de bus (1) est reliée à toutes les lignes (D, C, E) du bus de données (B).
